Europäisches Patentamt

European Patent Office

Office européen des brevets

(19)

(11) Publication number:

**0 350 331**
A1

(12) **EUROPEAN PATENT APPLICATION**

(21) Application number: **89306950.0**

(22) Date of filing: **07.07.89**

(51) Int. Cl.5: **C 10 G 11/05**
**B 01 J 29/06**

(30) Priority: **07.07.88 US 216682**

(43) Date of publication of application:
**10.01.90 Bulletin 90/02**

(84) Designated Contracting States:
**AT BE CH DE ES FR GB GR IT LI LU NL SE**

(71) Applicant: **ENGELHARD CORPORATION**
**Menlo Park, CN 40**
**Edison New Jersey 08818 (US)**

(72) Inventor: **Himpsl, Francis L.**
**153 Ravine Drive**
**Matawan New Jersey 07747 (US)**

**Koermer, Gerald S.**
**37 Stonegate Drive**
**Roseland New Jersey 07068 (US)**

(74) Representative: **Geering, Keith Edwin et al**
**REDDIE & GROSE 16 Theobalds Road**
**London WC1X 8PL (GB)**

(54) **Hydrocarbon cracking catalyst and method.**

(57)  Hydrocarbons, particularly gas oil, are cracked to products boiling in the motor fuel range by using a catalyst mixture comprising zeolite Y and zeolite L. The catalyst of this invention fuel having an increased octane number and suffering a smaller penalty with regard to yield relative to other octane additive systems.

EP 0 350 331 A1

Bundesdruckerei Berlin

**Description**

## HYDROCARBON CRACKING CATALYST AND METHOD

This invention relates to hydrocarbon cracking catalysts and use thereof to obtain gasoline of enhanced octane value.

This invention can give such octane boost at the expense of a smaller loss of gasoline product than has heretofore been possible.

Hydrocarbon conversion processes utilizing crystalline aluminosilicates have been extensively investigated as shown by patent and scientific literature. Crystalline aluminosilicates have been found particularly effective for a wide variety of hydrocarbon conversion processes, including the catalytic cracking of gas oil to produce motor fuels, and are described in many patents.

Hydrocarbon cracking catalysts of zeolite dispersed in a matrix are known, e.g. from U.S-A-3,140,249, -3,352,796, -3,647,718, -4,581,340, -4,581,341 and - 4,493,902.

It is also known to use a mixture of zeolites for various hydrocarbon conversions.

U.S-A- 4,137,152 discloses cracking with mixed faujasite and mordenite.

U.S.-A-3,894,934 discloses catalytic cracking of hydrocarbons using large-pore zeolite and ZSM-5.

U.S.-A-3,871,993 discloses upgrading the octane value of naphtha using shape-selective catalysts such as ZSM-5, ZSM-11, ZSM-12, ZSM-21, mordenite, etc.

U.S.-A-3,702,886 discloses the use of ZSM-5 zeolites alone or in combination with other materials such as zeolites or inert materials for catalytic cracking of hydrocarbons.

U.S.-A-3,804,747 discloses a hydrocarbon conversion process utilizing a mixture of zeolites X and Y.

U.S.-A-3,758,403 discloses catalytic cracking with large-pore zeolite such as zeolite Y and small-pore zeolite such as ZSM-5 in a siliceous matrix. The matrix may be active or inactive such as silica-alumina or alumina. The use of ZSM-5 type zeolite results in a fuel of increased octane number.

U.S.-A-3,769,202 discloses a combination catalyst of two different zeolites of pore sizes greater than 8 and less than 7 Angstrom units. The zeolites are mixed with an inorganic oxide matrix such as silica-alumina. The catalyst is stated to be suitable for cracking and hydrocracking of hydrocarbons.

U.S.-A-3,925,195 discloses cracking utilizing a mixture of rare earth hydrogen Y-type zeolites and hydrogen or transition metal exchanged mordenite, calcium exchanged type A zeolite or hydrogen exchanged erionite in an amorphous matrix.

U.S.-A-3,764,520 discloses a catalyst comprising two different zeolites, of pore size of 6 to 15 Angstrom units and below 6 Angstrom units, with an inorganic oxide support.

U.S.-A-4,287,048 discloses an ultra-stable Y type crystalline aluminosilicate in admixture with a small-pore crystalline aluminosilicate zeolite selected from erionite, mordenite, zeolite A, chabazite, offretite and a catalytic inorganic oxide matrix.

U.S.-A-4,309,280 discloses increasing the gasoline octane number and/or total gasoline yield in catalytic cracking by adding crystalline aluminosilicate zeolite having a silica-to-alumina mole ratio above 12 and a constraint index of approximately 1:12 to a cracking unit containing zeolite cracking catalyst such as zeolite Y.

EP-B-243629 discloses a cracking catalyst for producing high octane gasoline comprising zeolite Beta or ZSM-20 optionally containing up to 30 wt.% of secondary zeolite which can be zeolite X, zeolite Y, ferrierite, mordenite or mixtures thereof. These catalysts contain a matrix and the ratio of primary to secondary zeolite is at least 1:1.

Perrotta et al in the Journal of Catalysis, Vol. 55, pages 240-249 (1978) disclose catalytic cracking of gas oil with an omega-faujasite system wherein the catalyst is prepared by co-crystallization.

The catalytic properties of zeolite L have been studied - see Parra et al, Journal of Catalysis, Vol. 40, pages 52-60 (1975), and Peters et al, in an abstract entitled Octane Catalyst Design Strategies in Catalytic Cracking, published in connection with the 10th North American Meeting of the Catalysis Society held in San Diego on May 17-22, 1987.

There has been no recognition of utilizing mixed zeolites L and Y for catalytic cracking of gas oil to produce gasoline of enhanced octane value at a good gasoline yield.

We have discovered that improved octane number and overall yield can be obtained in the catalytic cracking of gas oil by utilizing a catalyst composition comprising a mixture of zeolites Y and L.

Zeolites Y and L are well known and described in numerous technical publications including patents.

Zeolite L is disclosed and claimed in U.S.-A-3,216,789, to which attention is directed for detail.

Improvements have been made in the manufacture of zeolite L and in processes involving particular morphologies of zeolite L - as summarized in U.S.-A-4,593-133, to which attention is directed for detail.

Zeolite Y includes both "normal" zeolite Y and zeolite Y which has been stabilized by heat treatment (ultra-stable Y type zeolite), which is well known and described, for example in U.S.-A-3,293,192 and -A-3,402,996 and in Society of Chemical Engineering (London) Monograph Molecular Sieves, page 186 (1968) by C. V. McDaniel and P. K. Maher, to all of which attention is directed for detail.

Zeolite Y also includes ion-exchanged forms, such as ammonium and rare earth or other metal exchanged forms.

When crystalline aluminosilicate zeolites are employed in commercial cracking such as FCC (fluid catalytic cracking) utilizing very finely-divided particles and TCC (thermofor catalytic cracking) using a moving bed type of reactor, the zeolite is associated with a matrix to provide the necessary physical characteristics.

The matrices employed in this invention can be those conventional in catalytic cracking and include materials which are catalytically active or inactive and are generally inorganic oxides, especially those such as alumina or silica. Catalytically active inorganic oxides such as clay, chemically treated clay, silica, silica-alumina, etc., are particularly preferred because they can provide catalysts of superior porosity and attrition resistance.

The novel catalyst composites of this invention may comprise a physical mixture of Y and L in a common matrix, or a mixture of Y in a matrix and a mixture of L in a matrix can be physically blended ; the matrices for the two zeolites need not be the same.

In another embodiment of this invention, zeolite L can be introduced into a cracking unit containing zeolite Y; the zeolite L can be introduced into the circulating catalyst inventory as finely-divided powder or in combination with a matrix which is catalytically active or inert. The zeolite L can be introduced into the regenerator or into contact with the hydrocarbon feedstock.

Zeolites L and Y can be synthesized from gel[s] and then combined with a matrix, or particles of zeolite L in a matrix or particles of both zeolites L and Y in the same matrix can be derived from clay precursor bodies by modification of known in situ procedures (such those described in U. S. 3,647,718 and U. S. 4,493,902) so that they would inherently have a silica-alumina matrix as a result of the synthesis process.

As is well known, the sodium content of zeolite Y must be reduced in order to impart desirable catalytic activity, and original cations associated with zeolite L can be replaced by well known techniques ; typical replacing cations for zeolites Y and L include hydrogen, ammonium and metal (e.g. rare earth, magnesium, zinc, manganese, aluminum and calcium) cations and mixtures thereof.

A typical ion exchange technique contacts the zeolite(s) with salt of the desired replacing cation or cations. A wide variety of salts can be employed, but preferred are chlorides, nitrates and sulfates. Methods representative of ion exchange techniques are disclosed in many patents including U. S. 3,140,249, 3,140,251 and 3,140,253.

To increase zeolite hydrothermal stability, it is often desirable to raise the silica / alumina molar ratio of the framework structure. This may be done in a number of ways, the commonest being calcination in steam ("ultrastabilization") and chemical dealumination with reagents such as ammonium hexafluorosilicate $(NH_4)_2SiF_6$ as in U. S. 4,610,856. It is well known that high $SiO_2/Al_2O_3$ or ultrastable zeolites have increased stability regardless of the method of preparation. We have found that the hydrothermal stability of zeolite L may be improved significantly by calcination in steam. Calcination is generally done following ion exchange ; typical calcination temperatures range from $500°F$ to $1500°F$ (preferably $1000°F$ to $1500°F$) for periods of from 1 to 48 hours or more. The treatment may be accomplished in atmospheres consisting partially or entirely of steam. This treatment could feasibly be accomplished within a commercial cracking unit by gradual addition of the unsteamed catalyst to the unit, for example.

It has been found that to obtain optimum beneficial properties for cracking of gas oil, the amount of zeolite L added is important. Moreover, during hydrothermal stabilization (calcination in steam) one generally observes a reduction in total zeolite L crystallinity as measured by x-ray diffraction. Thus, the effective amount of zeolite L must account for the degree of stabilization desired for the specific cracking application. Depending on the mode of addition of zeolite L to the catalytic cracking unit (e.g. addition with the fluid cracking catalyst component or addition to the hydrocarbon feed), the degree of stabilization needed, and hence the required additive amount of zeolite L, may differ considerably. In general, we find that ratios of "pure" zeolite L to "pure" zeolite Y preferably range from 0.02 to 0.8. The expression "pure" above is intended to define the zeolite without matrix. When considering the matrix, the zeolite Y preferably constitutes from 5 to 70%, and zeolite L from 0.1 to 60% (e.g. 3 to 6%), of the total catalyst composition.

These levels are effective in increasing gasoline RON via the process of this invention, but should not be considered as limiting.

The following examples illustrate the process of this invention.


## EXAMPLE 1

This example illustrates one method of preparing a catalyst composition of this invention.

A sample of microspheres containing zeolites L and Y may be prepared by spray drying the two zeolites, which are commercially available from the Linde Division of Union Carbide Corporation, along with kaolin (ASP-600) and sodium silicate as binder. A typical overall solids composition is 5% potassium form zeolite L, 20% sodium form zeolite Y, 20% sodium silicate and 55% kaolin. Following spray drying, the catalyst sample can be exhaustively ammonium ion exchanged using a 2 molar solution of ammonium nitrate at a pH of 3.0 to 3.2, for example, to result in a finished catalyst containing a suitably reduced alkali metal content.


## EXAMPLE 2

This example illustrate another method of preparing a catalyst composition of the invention and its use in the catalytic cracking of gas oil. Microspheres composed of 30% potassium form zeolite L (KL), 20% sodium

silicate ($SiO_2/Na_2O = 2$) and 50% hydrous high purity kaolin clay were prepared by spray drying a slurry containing zeolite L crystals, ASP® kaolin clay and sodium silicate solution. The microspheres were subjected to ammonium exchange with a 2M solution of ammonium nitrate until a potassium content of 0.95 $K_2O$ was obtained. Following ion exchange, the dried L-containing microspheres were calcined in air at 1000°F for one hour. Various amounts of additive microspheres L were blended with a steam deactivated hydrothermally stabilized zeolite Y-containing cracking catalyst (hereinafter Catalyst A) to result in zeolite L contents of 15%, 3%, and 0% based on total catalyst weight. A control sample was also utilized consisting of the same Catalyst A blended 1:1 with an activity adjusting component prepared by spray drying a slurry of hydrous kaolin to form microspheres and then calcining the microspheres substantially as described in U. S. 4,493,902 at column 16, line 6 to 15. Each experimental sample contained 50% by weight of the Catalyst A with the balance consisting of zeolite L-containing microspheres and the activity adjusting microspheres.

A catalyst similar to Catalyst A is described in EPA 0,194,101, published September 10, 1986, to which attention is directed for more detail.

A typical analysis and physical properties of Catalyst A used in this example are as follows:

| | |
|---|---|
| %$Al_2O_3$ | 42.20 |
| %$SiO_2$ | 54.90 |
| %$Na_2O$ | 0.36 |
| %$TiO_2$ | 1.59 |
| %$Fe_2O_3$ | 1.42 |
| %$CaO$ | 0.02 |
| %$MgO$ | 0.02 |
| %$K_2O$ | 0.03 |
| %$ReO$ | 0.00 |

Physical Properties:

Zeolite Index = 35
Unit Cell Size = 24.65 A
Total Surface Area = 385 $m^2/g$
$N_2$ Porosity ($< 100A$) = 0.15 cc/g
$N_2$ Porosity ($< 600A$) = 0.19 cc/g
Total $N_2$ Porosity = 0.33 cc/g

The above catalysts were evaluated by MAT testing, referenced in U. S. 4,493,902 at column 3, lines 30-50. Prior to carrying out the MAT tests, Catalyst A (alone) was deactivated by steam as described in U. S. 4,493,902 at column 4, lines 28-41. In combination with MAT testing, the catalysts were further evaluated to determine the relative research octane number (RON) of the gasoline fraction of the MAT syn crude by a test developed by W. Cronkright of M. W. Kellogg Corporation and described in a publication entitled "W. A. Cronkright and M. M. Butler, FCC Feedstock Evaluations Using the Micro Activity Test," M. W. Kellogg Company (1984). In the above test method, the syn crude gasoline fraction aromaticity and olefinicity are correlated so as to obtain a calculated research octane number.

The Cronkright method employed in the following example is a modification of an earlier procedure reported by Anderson, Sharkey and Walsh, Journal of the Institute of Petroleum, Vol. 58, page 83, 1982.

Attention is directed to the latter two publications for further detail.

Table 1 demonstrates the selectivity effects observed from zeolite L addition to Catalyst A.

As can be seen from Table 1, at a zeolite L level of 15%, gasoline yield loss was substantial accompanied by greatly increased coke and gas yields. By reducing the zeolite L level to 3%, gasoline loss was less severe, about 2.3% absolute at 70% conversion and, surprisingly, coke make was no worse than in the control sample. Note, however, that a substantial increase in RON was observed at an additive level of 3% zeolite L thereby demonstrating its usefulness in producing gasoline having increased octane number at a minimum cost in gasoline yield. The blend containing 0.5% zeolite L had less effect on product selectivities; however, it is likely that the effect observed on gasoline yield and RON is feedstock dependent, and such small levels of added zeolite L could improve product quality with alternate feeds.

## TABLE 1

### Catalytic Results from MAT Gas Oil Cracking

**CATALYST A/ACTIVITY ADJUSTING BLEND CONTROL 50/50**

| STM Temp °F | CONV Wt.% | ACTIVITY | C4-GAS | GASOLINE | LCO | BOTTOMS | COKE | DRY GAS | IC4/C4= | RON |
|---|---|---|---|---|---|---|---|---|---|---|
| 1,400.00 | 74.80 | 2.96 | 16.45 | 53.86 | 16.77 | 8.15 | 4.43 | 1.73 | 1.92 | 92.5 |
| 1,400.00 | 74.70 | 2.96 | 15.42 | 54.55 | 16.49 | 8.42 | 4.77 | 1.60 | 1.92 | 86.2 |
| 1,450.00 | 66.90 | 2.02 | 12.53 | 50.69 | 20.74 | 12.04 | 3.66 | 1.52 | 1.57 | 86.8 |
| 1,450.00 | 67.21 | 2.05 | 14.25 | 49.30 | 18.85 | 13.60 | 3.66 | 1.53 | 1.53 | 85.9 |
| 1,500.00 | 56.17 | 1.28 | 10.70 | 42.61 | 23.35 | 20.13 | 2.86 | 1.30 | 1.10 | 87.2 |
| 1,500.00 | 60.41 | 1.53 | 11.54 | 45.63 | 22.49 | 16.77 | 3.24 | 1.38 | 0.99 | 87.1 |

**CATALYST A/L BLEND TOTAL L CONTENT = 15%**

| STM Temp °F | CONV Wt.% | ACTIVITY | C4-GAS | GASOLINE | LCO | BOTTOMS | COKE | DRY GAS | IC4/C4= | RON |
|---|---|---|---|---|---|---|---|---|---|---|
| 1,400.00 | 69.49 | 2.28 | 16.98 | 45.77 | 16.42 | 13.76 | 6.73 | 2.08 | 3.14 | 87.3 |
| 1,400.00 | 76.99 | 3.35 | 19.75 | 50.59 | 15.24 | 7.44 | 6.64 | 2.15 | 2.75 | 87.6 |
| 1,450.00 | 74.08 | 2.86 | 17.73 | 50.46 | 16.13 | 9.46 | 5.89 | 1.91 | 2.16 | 85.7 |
| 1,450.00 | 73.59 | 2.79 | 17.21 | 50.49 | 16.29 | 9.79 | 5.89 | 1.89 | 2.28 | 85.2 |
| 1,500.00 | 62.75 | 1.68 | 14.07 | 42.86 | 21.05 | 15.86 | 5.83 | 1.59 | 1.68 | 85.1 |
| 1,500.00 | 65.92 | 1.93 | 14.46 | 45.39 | 20.27 | 13.48 | 6.06 | 1.63 | 1.69 | 85.4 |

**CATALYST A/L BLEND TOTAL L CONTENT = 3%**

| STM Temp °F | CONV Wt.% | ACTIVITY | C4-GAS | GASOLINE | LCO | BOTTOMS | COKE | DRY GAS | IC4/C4= | RON |
|---|---|---|---|---|---|---|---|---|---|---|
| 1,400.00 | 76.87 | 3.32 | 18.92 | 52.28 | 15.23 | 7.56 | 5.67 | 2.00 | 2.34 | 88.6 |
| 1,400.00 | 76.64 | 3.28 | 18.90 | 53.39 | 15.44 | 7.58 | 4.35 | 1.93 | 2.37 | 88.5 |
| 1,450.00 | 72.58 | 2.65 | 17.59 | 50.21 | 17.21 | 9.87 | 4.79 | 1.75 | 1.86 | 88.7 |
| 1,500.00 | 66.45 | 1.98 | 15.16 | 47.65 | 20.30 | 12.92 | 3.64 | 1.34 | 1.23 | 87.9 |
| 1,500.00 | 62.57 | 1.67 | 18.85 | 40.74 | 21.01 | 16.09 | 2.98 | 1.45 | 1.22 | 90.3 |

**CATALYST A/L BLEND TOTAL L CONTENT = 0.5%**

| STM Temp °F | CONV Wt.% | ACTIVITY | C4-GAS | GASOLINE | LCO | BOTTOMS | COKE | DRY GAS | IC4/C4= | RON |
|---|---|---|---|---|---|---|---|---|---|---|
| 1,400.00 | 79.23 | 3.82 | 17.81 | 54.92 | 13.99 | 6.45 | 6.51 | 2.02 | 3.04 | |
| 1,400.00 | 79.18 | 3.80 | 17.99 | 55.11 | 14.02 | 6.46 | 6.09 | 2.07 | 2.85 | |
| 1,450.00 | 71.06 | 2.46 | 14.87 | 51.76 | 17.84 | 10.77 | 4.43 | 1.70 | 1.85 | |
| 1,450.00 | 71.25 | 2.48 | 15.14 | 52.13 | 17.71 | 10.71 | 3.98 | 1.59 | 1.62 | |
| 1,500.00 | 62.80 | 1.69 | 12.95 | 46.19 | 20.96 | 15.91 | 3.65 | 1.42 | 1.12 | |
| 1,500.00 | 63.19 | 1.72 | 13.25 | 46.25 | 20.63 | 15.84 | 3.69 | 1.44 | 1.17 | |

EP 0 350 331 A1

## EXAMPLE 3

This example illustrates another technique for the preparation of a catalyst of this invention as well as the catalytic testing thereof to show enhanced octane improvement. In these experiments, a different cracking catalyst (Catalyst B) was employed. The cracking catalyst is a rare earth-containing Y which was prepared in situ from a mixture of microspheres of calcined kaolin clay substantially in accordance with the teachings of U. S. 3,647,718, to which attention is directed for detail. The analysis of the zeolite Y-containing catalyst and its physical properties are as follows:

| | |
|---|---|
| $\%Al_2O_3$ | 52.50 |
| $\%SiO_2$ | 42.40 |
| $\%Na_2O$ | 0.46 |
| $\%TiO_2$ | 2.18 |
| $\%Fe_2O_3$ | 0.46 |
| $\%CaO$ | 0.02 |
| $\%MgO$ | 0.02 |
| $\%K_2O$ | 0.01 |
| $\%ReO$ | 1.88 |

Physical Properties:

Zeolite Index = 16
Unit Cell Size = 24.74 A
Total Surface Area = 265 $m^2/g$
$N_2$ Porosity (< 100A) = 0.15 cc/g
$N_2$ Porosity (< 600A) = 0.20 cc/g
Total $N_2$ Porosity = 0.29 cc/g

A sample of zeolite L-containing microspheres was prepared by spray drying zeolite L obtained from Union Carbide Corporation along with kaolin (ASP-600) and sodium silicate as a binder. Composition of the dryer feed was 30% zeolite L/20% sodium silicate/50% hydrous kaolin. A sample of the microspheres containing 30% zeolite L was ammonium exchanged to about 1% $K_2O$, using an aqueous 1:1 dilution of commercial 54% ammonium nitrate solution. The exchange procedure consisted of slurrying the catalyst in aqueous ammonium nitrate at a 1:2 ratio with stirring while adjusting the pH to 3.0-3.2, then heating to 180°F for a period of about 15 minutes. Following this, the sample was filtered and washed with a volume of water at least equal to that of the catalyst. Typically, 10 or more exchanges by this technique are necessary to reduce the potassium content (as %$K_2O$) to the desired level of at least 1.0.

The microspheres containing zeolite L were then calcined for 3 hours at 1100°F under "self steaming" conditions using a covered silica calcining tray with 10% water added prior to calcination. Following this calcination step, the sample was ammonium exchanged twice in accordance with the procedure above described and then calcined for an additional 3 hours at 1100°F. Catalyst B and the L-containing microspheres were then blended at 5% and 20% additive levels of microspheres containing zeolite L.

It is important to note that the percentages of added zeolite L in Table 2 refer to the amount of "pure" zeolite L incorporated within the microspheres during spray drying. Some crystallinity is lost during subsequent ion exchange and stabilization procedures. Therefore, the amounts of zeolite L specified here are likely to be greater than the amount of zeolite L actually present, although still generally representative of a functional additive loading.

The results obtained compared to a control containing no additive are shown in the following table when utilizing the catalyst in FCC cracking. The test conditions used are also included in The Table 2.

6

TABLE 2

FCC PILOT UNIT YIELDS AND OPERATING CONDITIONS

CATALYST B WITH L CONTAINING MICROSPHERES

| Catalyst | Catalyst B | | Catalyst B + 5% Additive | | Catalyst B + 20% Additive | |
|---|---|---|---|---|---|---|
| Zeolite L, Wt.% | 0 | | 1.5 | | 6.0 | |
| | Act | Norm | Act | Norm | Act | Norm |
| Conversion (421°F EP) | 69.74 | 70.00 | 70.01 | 70.00 | .71.57 | 70.00 |
| Activity | 2.30 | 2.33 | 2.33 | 2.33 | 2.52 | 2.33 |
| H$_2$S | 0.26 | 0.26 | 0.23 | 0.23 | 0.24 | 0.23 |
| Hydrogen | 0.06 | 0.06 | 0.06 | 0.06 | 0.06 | 0.06 |
| Methane | 0.27 | 0.27 | 0.30 | 0.30 | 0.31 | 0.30 |
| Ethylene | 0.31 | 0.31 | 0.36 | 0.36 | 0.43 | 0.42 |
| Ethane | 0.19 | 0.19 | 0.22 | 0.22 | 0.23 | 0.22 |
| Propylene | 2.95 | 2.96 | 3.31 | 3.31 | 3.80 | 3.72 |
| Propane | 0.29 | 0.29 | 0.35 | 0.35 | 0.49 | 0.48 |
| I-Butane | 1.72 | 1.73 | 1.92 | 1.92 | 2.24 | 2.19 |
| Butylenes | 2.13 | 2.14 | 2.36 | 2.36 | 2.54 | 2.48 |
| N-Butane | 0.22 | 0.22 | 0.26 | 0.26 | 0.35 | 0.34 |
| Trans-Butene-2 | 0.90 | 0.90 | 0.99 | 0.99 | 1.09 | 1.07 |
| Cis-Butene-2 | 0.64 | 0.64 | 0.70 | 0.70 | 0.76 | 0.74 |
| 1,3-Butadiene | 0.02 | 0.02 | 0.02 | 0.02 | 0.02 | 0.02 |
| iC$_4$/C$_4$ Olefins | | 0.81 | | 0.81 | | 0.88 |
| C$_2$-Minus | 1.09 | 1.09 | 1.17 | 1.17 | 1.27 | 1.24 |
| LPG | 8.85 | 8.88 | 9.90 | 9.90 | 11.28 | 11.03 |
| Gasoline (421 EP) | 57.05 | 57.26 | 56.14 | 56.13 | 56.45 | 55.21 |
| LCO (602 EP) | 19.42 | 19.25 | 19.32 | 19.33 | 17.87 | 18.86 |
| Bottoms (602+) | 10.84 | 10.75 | 10.67 | 10.67 | 10.56 | 11.14 |
| Coke | 2.75 | 2.76 | 2.79 | 2.79 | 2.57 | 2.51 |
| C/O | 14.64 | | 14.24 | | 15.65 | |
| Reactor T, °F | 970 | | 972 | | 971 | |
| Regen T, °F | 1261 | | 1263 | | 1253 | |
| Delta Carbon | 0.18 | | 0.19 | | 0.16 | |
| C$_5$-421°F RON | 89.2 | | 89.2 | | 90.3 | |
| C$_5$-421°F MON | 78.4 | | 78.4 | | 78.8 | |

As can be seen from Table 2, when utilizing a 20% additive of zeolite L-containing microspheres equivalent to 6% by weight of pure zeolite L, the research octane number of the resulting gasoline was enhanced by +1.1 and the motor octane number was enhanced by +0.4 at a gasoline yield loss of only 2.05%.

When using a catalyst blend containing only 1.5% zeolite L, no substantial increase in octane number was obtained over the standard.

EXAMPLE 4

This example is a comparison in that instead of using 6 wt.% L, as in the previous example, 1.2 wt.% of ZSM-5 was utilized. ZSM-5 is a product of the Mobil Oil Corporation. Test conditions were the same as in Example 3.

The results obtained are shown in Table 3.

### TABLE 3

#### FCC PILOT UNIT RESULTS

#### CATALYST B WITH ADDED MICROSPHERES CONTAINING ZSM-5

|  | Catalyst B | Catalyst B + 1.2% ZSM* |
|---|---|---|
| % Conversion | 69.64 | 69.75 |
| Activity | 2.29 | 2.31 |
| $H_2S$ | 0.22 | 0.23 |
| Hydrogen | 0.04 | 0.04 |
| Methane | 0.52 | 0.48 |
| Ethylene | 0.41 | 0.50 |
| Ethane | 0.27 | 0.23 |
| Propylene | 3.33 | 5.35 |
| Propane | 0.35 | 0.44 |
| iso-Butane | 1.94 | 2.34 |
| Butylenes | 2.56 | 3.45 |
| n-Butane | 0.26 | 0.31 |
| tr-2-Butene | 1.12 | 1.53 |
| cis-2-Butene | 0.80 | 1.09 |
| 1,3 Butadiene | 0.03 | 0.03 |
| $C_4$- Gas | 11.85 | 16.01 |
| Gasoline | 55.44 | 51.45 |
| LCO | 19.17 | 19.33 |
| Bottoms | 11.20 | 10.92 |
| Coke | 2.35 | 2.29 |
| Dry Gas | 1.47 | 1.47 |
| RON | 88.6 | 90.1 |
| MON | 77.7 | 78.1 |

* Weight based on total catalyst blend.

#### Comparisons of Example 3 with Example 4.

The use of 5% zeolite L as opposed to 1.2% ZSM-5 resulted in substantial octane increase at less yield loss as can be seen from Table 4.

### TABLE 4

#### FCC PILOT UNIT EVALUATION OF CATALYST B AND ZSM-5 AT 70% CONVERSION

|  | RON | MON | YLD. LOSS | % ZEOLITE ADDED |
|---|---|---|---|---|
| Catalyst B/L | +1.1 | +0.4 | -2.05 | +6.0* |
| Catalyst B/ZSM | +1.5 | +0.4 | -3.99 | +1.2 |

(*Zeolite level quoted is prior to stabilization and steaming; may not be optimized.)

## Claims

1. A process for the catalytic cracking of gas oil to obtain gasoline wherein said gas oil is contacted at elevated temperature with crystalline aluminosilicate zeolite catalyst composition, said catalyst composition comprising zeolites L and Y.

2. A process according to claim 1 wherein the catalyst composition includes an inorganic matrix associated with one or both zeolite(s) or present as separate discrete particles.

3. A process according to claim 1 or 2 wherein the zeolite L is present in an amount of 0.1 to 60 wt.%, preferably 3 to 6 wt.%, based on total catalyst composition.

4. A process according to any preceding claim wherein zeolite Y is present in an amount of 5 to 70 wt.% based on total catalyst composition.

5. A process according to any preceding claim wherein the weight ratio of zeolite L to zeolite Y in the catalyst composition, disregarding any matrix, is from 0.02 to 0.8.

6. A process according to any preceding claim wherein catalytic cracking is carried out in a fluid catalytic cracking unit, or TCC.

7. A process according to any preceding claim wherein said zeolite Y is hydrothermally stabilized zeolite Y and/or said zeolite L is ultrastable L.

8. A catalyst composition comprising a mixture of zeolites L and Y, optionally with porous inorganic matrix, zeolite L preferably being present in an amount of 3-6 wt.% based on total catalyst composition.

9. A catalyst composition according to claim 8 wherein said zeolite Y is prepared from clay.

10. A catalyst composition according to claim 8 or 9 wherein said zeolite Y is hydrothermally stabilized zeolite Y and/or said zeolite L is ultrastable zeolite L.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 203 675 (SHELL)<br>* Page 3, line 20; examples I,III;<br>pages 7-10; examples VII-IX; pages<br>16-22 * | | C 10 G 11/05<br>B 01 J 29/06 |
| A | US-A-4 612 298 (W.P. HETTINGER, Jr.)<br>* Claim 34 * | | |
| A | EP-A-0 112 956 (ASHLAND OIL)<br>* Page 9, lines 8-23 * | | |
| A | WO-A-8 202 677 (UNION OIL)<br>* Claim 4 * | | |
| A | FR-A-1 494 704 (MOBIL OIL) | | |
| A | EP-A-0 258 127 (I.F.P.) | | |

TECHNICAL FIELDS
SEARCHED (Int. Cl.5)

B 01 J 29/00
C 10 G 11/00

The present search report has been drawn up for all claims

| Place of search | Date of completion of the search | Examiner |
|---|---|---|
| THE HAGUE | 01-09-1989 | DEVISME F.R. |